# EUROPÄISCHE PATENTSCHRIFT

(11) **EP 0 928 728 B1**
(45) Veröffentlichungstag und Bekanntmachung des Hinweises auf die Patenterteilung: **14.01.2004**
(21) Anmeldenummer: 98121302.8
(22) Anmeldetag: 09.11.1998
(51) Int. Cl.: B60T 7/10, B60T 13/74

(54) **Betätigungseinrichtung für eine Feststellbremse**
Actuating device for a parking brake
Dispositif d'actionnement pour frein de stationnement

(30) Priorität: 10.01.1998 DE 19800679
(43) Veröffentlichungstag der Anmeldung: 14.07.1999
(73) Patentinhaber: ED. Scharwächter GmbH, 42855 Remscheid (DE)
(72) Erfinder: Bode, Sven Dipl.-Ing., 42855 Remscheid (DE)
(74) Vertreter: Sparing, Rolf Klaus

(56) Entgegenhaltungen:
- FR-A- 2 734 227
- US-A- 4 817 463

## Beschreibung

Die Erfindung betrifft eine Betätigungseinrichtung nach dem Oberbegriff des Anspruchs 1.

Betätigungseinrichtungen, bei denen eine wahlweise Betätigung der Feststellbremse mittels Muskelkraft oder mittels insbesondere einer elektromotorischen Hilfskraft vorgesehen ist, sind in unterschiedlichsten Ausgestaltungsformen in der Praxis vorgestellt worden, wobei in jedem Falle eine Verbesserung des Bedienungskomforts des Fahrzeuges angestrebt wird.
Dabei sind neben verhältnismäßig einfach aufgebauten Betätigungseinrichtungen,bei welchen die Feststellbremse im Normalbetrieb mittels einer elektromotorischen Hilfskraft und nur im Störfall mittels eines herkömmlichen Handhebels durch Muskelkraft angezogen wird, auch solche Betätigungseinrichtungen bekannt, bei denen die Feststellbremse nach Wunsch entweder mittels eines üblichen Handbremshebels oder Pedales ausschließlich durch Muskelkraft oder aber mittels eines entsprechenden Schalters ausschließlich durch eine elektromotorische Hilfskraft betätigt werden kann.

DE-A-3 210 402 beschreibt eine Betätigungseinrichtung, bei der zumindest das dem Handbremshebel Ende des die Schwenkbewegung des Handbremshebels auf die Zuspannorgane der Feststellbremse übertragende Kraftübertragungsgliedes als Seil ausgebildet und im Abstand zur Schwenkachse am Handbremshebel befestigt ist. Außerdem ist es mindestens einmal um ein von einem ein-und ausschaltbaren Elektromotor angetriebenes Reibrad geschlungen, wobei der Elektromotor entweder auf dem schwenkbaren Handbremshebel oder aber getrennt davon an der Fahrzeugkarosserie befestigt ist. Bei dieser Betätigungseinrichtung ist ein dem Einschalten des Elektromotors zugeordneter Schalter am Handbremshebel angeordnet und wird, wenn der Handbremshebel zum Anziehen der Feststellbremse nach oben verschwenkt wird, vom Elektromotor über das Reibrad eine die vom Handbremshebel aufgebrachte Betätigungskraft unterstützende Servokraft in das seilförmige Kraftübertragungsglied eingeleitet. Eine ausschließlich elektromotorische Betätigung der Feststellbremse ist daher bei dieser Betätigungseinrichtung nicht möglich.
Bei einer weiteren bekannten Betätigungseinrichtung für eine Feststellbremse ist ein um eine feststehende Achse schwenk-und gegebenenfalls mittels einer Klinke in unterschiedlichen Schwenklagen feststellbarer Handbremshebel mit einer auf der gleichen Achse gelagerten, die Zuspannvorrichtung für die Bremsseile bildenden Seilscheibe koppelbar und ist ferner ein Elektromotor vermittels eines nachgeschalteten Getriebes gleichfalls mit der die Zuspannvorrichtung für die Bremsseile bildenden Seilscheibe koppelbar. Dem wechselweisen Betätigen der Zuspannvorrichtung für die Bremsseile einerseits durch den Handbremshebel und andererseits durch den Elektromotor ist eine mittels einer manuell betätigbaren Ausrückeinrichtung verstellbare Kupplung zugeordnet, welche es erlaubt,die Zuspannvorrichtung für die Bremsseile wahlweise mit dem durch den Elektromotor gebildeten Hilfsantrieb oder aber mit dem manuell betätigbaren Handbremshebel zu verbinden. Diese Betätigungseinrichtung läßt zwar eine wahlweise Betätigung der Feststellbremse ausschließlich durch Muskelkraft oder ausschließlich durch einen Elektromotor zu, erfordert aber eine großbauende Anordnung, da der Handbremshebel, die Zuspannvorrichtung für die Bremsseile und die Wechselkupplung zum wahlweisen verbinden der Zuspannvorrichtung mit dem Handbremshebel oder dem Elektromotor und wenigstens das Abtriebsritzel eines dem Elektromotor nachgeschalteten Getriebe in Reihe angeordnet werden müssen. Darüber hinaus kann eine solche Betätigungseinrichtung nur unter großen Schwierigkeiten und entsprechendem Aufwand für eine Pedalbetätigung eingerichtet werden.

US-A-4 817 463 zeigt eine Betätigungseinrichtung für eine seilzugbetätigte Feststellbremse, welche ausschließlich mit einer motorischen Unterstützung betätigt wird. Die motorische Unterstützung ist als elektrischer Motor ausgebildet, der ein Drehmoment auf ein Schneckengetriebe in eine einzige Richtung beaufschlagen kann, welches Schneckengetriebe seinerseits mit einem Ringrad gekoppelt ist, um entsprechend das Planetengetriebe aus der gelösten Position in eine Parkposition zu verlagern und hierdurch das Seil zu spannen, welches mit einer Bremsbacke des Fahrzeugs verbunden ist. Der Motor kann ein Drehmoment auf das Schneckengetriebe lediglich in eine Richtung beaufschlagen, so daß das Lösen des Planetengetriebes durch Lösen des Sonnenrads erfolgen muß, welches durch ein Solenoid und eine Feder während der Betätigung durch den Motor gehalten ist. Um das Sonnenrad zu lösen, wird das Solenoid betätigt und erlaubt dementsprechend dem Sonnenrad zu rotieren, so daß das Planetengetriebe in der Lage ist, in seine Parkposition zurück zu kehren.

FR-A-2 734 227 beschreibt ein Bremssystem für Fahrzeuge, insbesondere Zweiräder, bei weichem ein Bremszug mit Handgriff betätigbar ist, wobei jeweils zwei von einem Handgriff abgehende Seilzüge einer Betätigungseinrichtung zugeführt werden, wo diese in eine hydraulische Bremskraft umgesetzt werden, mit der die Räder beaufschlagt werden, wobei die Übertragungseinheit, mit der die an den Seilzug angelegte Bremskraft auf ein Rad übertragen wird, über ein Sonnenrad eines Planetengetriebes gekuppelt ist, wobei das Sonnenrad über eine elektromechanische Kupplung bzw. einen Motor abbremsbar ist.

Es ist die Aufgabe der Erfindung, eine Betätigungseinrichtung nach dem Oberbegriff des Anspruchs 1 anzugeben, die bei geringem technischen Aufwand und geringen Anforderungen an Einbauraum eine wahlweise Betätigung durch Muskelkraft oder elektromotorische Hilfskraft gewährleistet.

Diese Aufgabe wird bei der eingangs genannten Betätigungseinrichtung erfindungsgemäß mit den kennzeichnenden Merkmalen des Anspruchs 1 gelöst.

Der Einsatz eines Planetengetriebes bildet ein mit billig herstellbaren Teilen verwirklichbares und kleinbauendes Mittel zum wahlweisen Antrieb der Zuspannvorrichtung für die Bremsseile durch unterschiedliche Kraftquellen. Zugleich ermöglicht die erfindungsgemäße Anwendung eines Planetengetriebes auch eine höchst einfache Ausbildung und Anordnung der Umschaltvorrichtung zur-Auswahl der Betätigungsweise für die Feststellbremse, insbesondere dahingehend, daß die Umschaltvorrichtung bzw. deren Betätigungsmittel, beispielsweise ein Knopf, zum Planetengetriebe räumlich getrennt an einer vom Fahrer bequem erreichbaren Stelle des Fahrzeuges angeordnet werden kann. Darüber hinaus ermöglicht die Anwendung eines Planetengetriebes auch die einfache Realisierung unterschiedlicher Übertragungsverhältnisse bezüglich der Betätigung durch Muskelkraft oder der Betätigung durch Motorkraft.

In einer bevorzugten Verwirklichungsform ist vorgesehen, daß das erste mit dem durch das mittels Muskelkraft verstellbare Organ getriebenen Antriebszug verbundene Getriebeglied durch das Sonnenrad des Planetengetriebes und das zweite mit dem vom Hilfsmotor getriebenen Antriebszug verbundene Getriebeglied der Planetenträger des Planetengetriebes ist, wobei zum wahlweisen Verbinden des von dem mittels Muskelkraft verstellbaren Organ getriebenen Antriebszuges mit dem ersten und des vom Hilfsmotor getriebenen Antriebszuges mit dem zweiten Getriebeglied wechselweise das Sonnenrad oder der Planetenträger des Planetengetriebes blockierbar bzw. antreibbar sind und wobei ferner vorgesehen ist, daß das das erste Getriebeglied bildende Sonnenrad bzw. der das zweite Getriebeglied bildende Planetenträger des Planetengetriebes jeweils mittels einer in den zugeordneten Antriebszug eingeschalteten Blockiereinrichtung festsetzbar sind.

In einer im Interesse einer kleinbauenden Ausbildung der Betätigungseinrichtung zweckmäßigen Ausgestaltungsform ist vorgesehen, daß die Zuspannvorrichtung wenigstens teilweise als Seilscheibe ausgebildet und mit dem das dritte Getriebeglied bildenden Hohlrad des Planetengetriebes drehsicher verbunden ist. Diese Gestaltungsform schließt naturgemäß auch eine baueinheitliche Ausbildung von Hohlrad und Seilscheibe ein.

Hinsichtlich der Betätigung der Feststellbremse durch Muskelkraft ist in einer ersten Bauweise vorgesehen, daß das dem Antrieb des dem ersten Getriebeglied des Planetengetriebes zugeordneten Antriebszuges zugeordnete Organ durch einen an sich bekannten vermittels eines Trägers schwenkbar an der Fahrzeugkarosserie abgestützten Handbemshebel gebildet und vermittels eines Seilzuges und einer Seilscheibe mit dem Sonnenrad verbunden ist.
Außer einer manuellen Betätigung durch einen herkömmlichen Handbremshebel kann die Betätigung der Feststellbremse durch Muskelkraft auch in der Weise erfolgen, daß das dem Antrieb des dem ersten Getriebeglied des Planetengetriebes zugeordneten Antriebszuges zugeordnete Organ durch ein in an sich bekannter Weise vermittels eines Trägers schwenkbar an der Fahrzeugkarosserie abgestütztes Pedal gebildet und vermittels eines Seilzuges und einer Seilscheibe mit dem Sonnenrad verbunden ist.

Unabhängig davon ob das dem Antrieb durch Muskelkraft zugeordnete Organ nun ein Handbremshebel oder ein Pedal ist hinsichtlich des Anschlusses an das Sonnenrad des Planetengetriebes vorgesehen, daß die dem in den mit Muskelkraft antreibbaren Antriebszug eingeschalteten Seilzug zugeordnete Seilscheibe vermittels eines Arretierungsscheiben umfassenden Rastmechanismusses mit einer das Sonnenrad tragenden Welle verbunden ist, wobei der Rastmechanismus derart ausgelegt ist, daß die Seilscheibe nur bei Betätigung des zugehörigen Antriebszuges mit der das Sonnenrad tragenden Welle bzw. dem Sonnenrad verbunden wird.

Das Umschalten zwischen muskelkraftbetriebener und motorkraftbetriebener Betätigungsweise der Feststellbremse erfolgt durch wechselweises Festsetzen und Freigeben des ersten oder zweiten Getriebegliedes, in der Weise, daß das Festsetzen des dem muskelkraftbetriebenen Antrieb zugeordneten Sonnenrades zugleich auch die Freigabe des mit dem Elektromotor verbundenen Planetenträgers und gegebenenfalls zugleich auch das Einschalten des Elektromotors zur Folge hat. In diesem Zusammenhang ist nach einer ersten Ausgestaltungsform hinsichtlich der Festsetzung des Sonnenrades beim Umschalten auf elektromotorischen Betrieb vorgesehen, daß dem das mit Muskelkraft betätigbare Organ mit dem Sonnenrad des Planetengetriebes verbindenden Seilzug eine durch eine Schlingfeder gebildete, auf das Sonnenrad bzw. auf die dieses tragende Welle wirkende Arretiereinrichtung zugeordnet ist. Die durch die Schlingfeder gebildete Arretiereinrichtung ist dabei zweckmäßigerweise selbsteinrückend und der Freigabe der Schlingfeder ist daher zweckmäßigerweise ein mittels eines im Griffbereich des Fahrers angeordneten Löseknopfes bzw. Betätigungsgriffes betätigbarer Bowdenzug zugeordnet.

Nach einer zweiten Ausgestaltungsform kann hinsichtlich der Festsetzung des Sonnenrades beim Umschalten auf elektromotorischen Betrieb aber vorzugsweise in Verbindung mit einer Handbetätigung auch vorgesehen sein, daß dem das mit Muskelkraft betätigbare Organ mit dem Sonnenrad des Planetengetriebes verbindenden Seilzug eine durch ein Klinken- Zahnsegment gebildete Arretiereinrichtung zugeordnet ist. Dem Lösen der durch das Klinken- Zahnsegment gebildeten Arretierungseinrichtung ist ein vorteilhaft am Handbremshebel angeordneter Löseknopf zugeordnet. Selbstverständlich kann der Löseknopf auch an anderer vom Fahrer bequem erreichbarer Stelle angeordnet werden.

In umgekehrter Richtung erfordert der Übergang von elektromotorischer Betätigungsweise auf eine muskelkraftbetriebene Betätigungsweise ein Festsetzen des Planetenträgers, Hierzu ist in einer Weiterbildung der Erfindung vorgesehen, daß der dem das zweite Getriebeglied bildenden Planetenträger zugeordnete Antriebszug einen vermittels eines Schneckentriebes mit dem Planetenträger gekoppelten Elektromotor umfaßt, wobei die Einrichtung zum Festsetzen des Planetenträgers durch das dem Elektromotor nachgeschaltete Schnekkengetriebe gebildet ist.
Dem Elektromotor ist im Übrigen eine zweckmäßigerweise durch einen im Bereich des Fahrersitzes bzw. an einer vom Fahrer bequem zu erreichenden Stelle angeordneten Betätigungsknopf oder dergl. gebildete Einschalteinrichtung zum aktivieren seiner Feststell-oder Lösefunktion zugeordnet.

In weiterer Einzelausgestaltung der Erfindung kann schließlich noch vorgesehen sein, daß in das wenigstens eine Bremsseil ein Kraftsensor eingeschaltet ist, welcher die jeweils im Bremsseil herrschende Zugkraft erfaßt und einer Steuereinrichtung zuleitet, welche die Stromversorgung für den Elektromotor beherrscht.

Die Erfindung ist in der nachfolgenden Beispielsbeschreibung anhand eines in der Zeichnung dargestellten Ausführungsbeispieles im Einzelnen beschrieben.

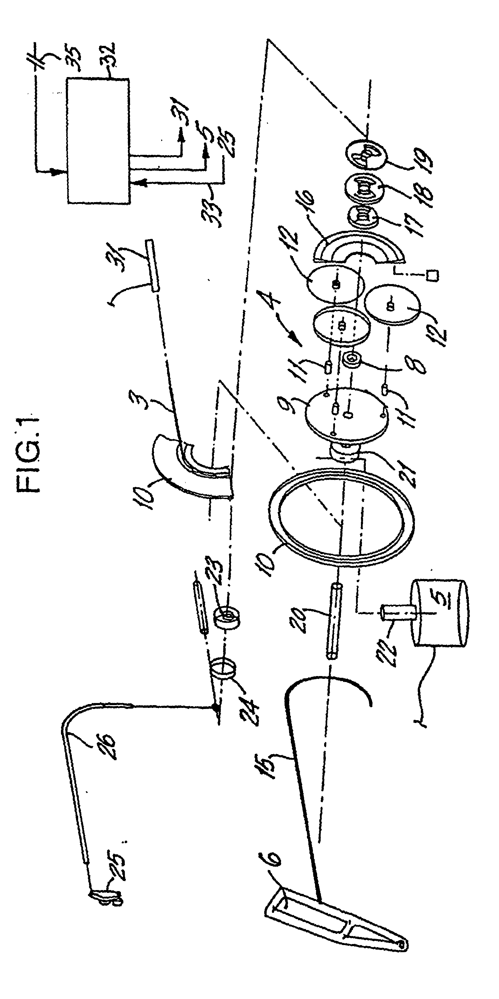

- Fig. 1: zeigt eine schematische Explosionsdarstellung einer Betätigungseinrichtung für eine Feststellbremse.
- Fig. 2: zeigt eine gleichfalls schematische Darstellung einer ersten Gestaltungsform einer Betätigungseinrichtung für eine Feststellbremse.
- Fig. 3: zeigt eine gleichfalls schematische Darstellung einer zweiten Gestaltungsform einer Betätigungseinrichtung für eine Feststellbremse.

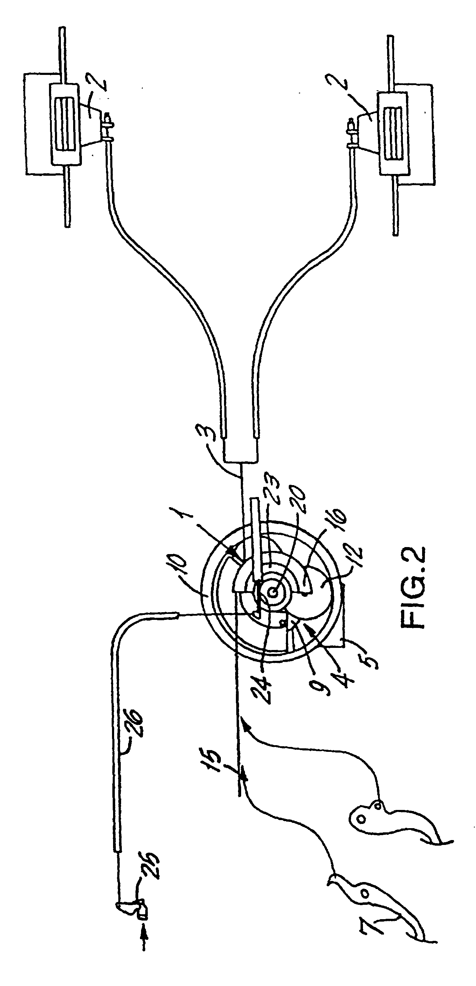

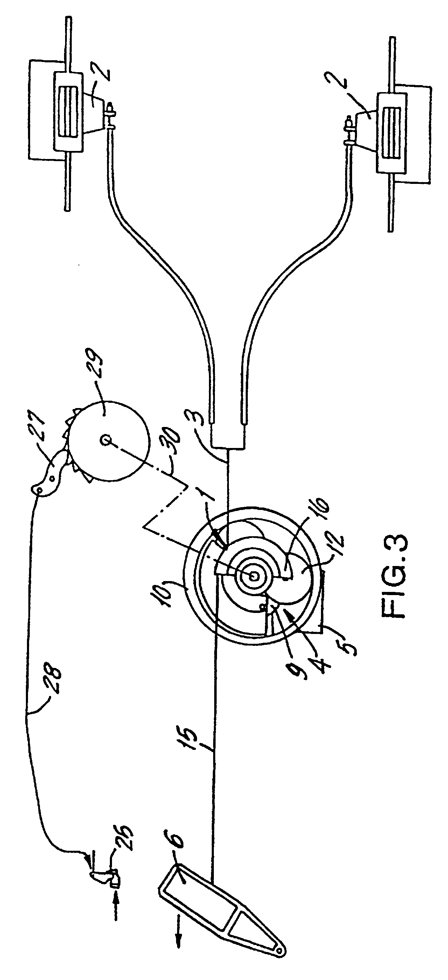

Die in der Zeichnung schematisch dargestellte Betätigungseinrichtung für die Feststellbremse eines Kraftfahrzeuges umfaßt im Wesentlichen eine Zuspannvorrichtung 1 und ein die Zuspanneinrichtung 1 mit den beiden Radbremsorganen 2 der Hinterachse verbindendes Bremsseil 3 sowie eine durch ein Planetengetriebe 4 gebildete Einrichtung zum wahlweisen Verbinden der Zuspannvorrichtung 1 mit einem Elektromotor 5 oder einem durch Muskelkraft antreibbaren Organ, Handbremshebel 6 oder Pedal 7. Das Planetengetriebe 4 besitzt ein erstes,durch ein Sonnenrad 8 gebildetes Getriebeglied und ein zweites, durch einen Planetenträger 9 gebildetes Getriebeglied sowie ein drittes, durch ein Hohlrad 10 gebildetes Getriebeglied. Das dritte durch das Hohlrad 10 gebildete Getriebeglied ist in allen gezeigten Ausführungsformen baueinheitlich mit der durch eine Seilscheibe gebildeten Zuspannvorrichtung 1 ausgebildet. Das Hohlrad 10 wird durch die vermittels Achsen 11 am Planetenträger 9 gelagerten Planetenräder 12 wechselweise durch den angetriebenen Planetenträger 9 oder das angetriebene Sonnenrad 8 angetrieben, wobei das jeweils andere Getriebeglied festgesetzt ist. Bei muskelkraftbetriebener Betätigung der Feststellbremse wird vermittels Handbremshebels 6 oder Pedales 7 ein Seilzug 15 angetrieben, welcher seinerseits auf eine Seilscheibe 16 wirkt, die ihrerseits vermittels eines aus zwei Arretierungsscheiben 17 und 18 sowie einer Gegenhalterscheibe 19 gebildeten Rastmechanismusses selbsttätig mit dem Sonnenrad 8 bzw. einer dieses tragenden Achse 20 kuppelbar ist. Der Planetenträger 9 ist bei dieser Betriebsweise der Feststellbremse durch den Elektromotor 5 und das diesem nachgeschaltete, mit einem Antriebsritzel 21 des Planetenträgers 9 kämmende Schneckengetriebe 22 festgesetzt.
Beim Übergang von muskelkraftbetriebener Betätigung auf elektromotorische Betätigung der Betätigungseinrichtung wird zunächst das Sonnenrad 8 festgesetzt, wozu bei der Ausführungsform gemäß Fig. 2 eine ein mit der das Sonnenrad 8 tragenden Achse 20 verbundenes Klemmrad 23 umgreifende Schlingfeder 24 in Einrückstellung gebracht und dadurch das Sonnenrad 8 festgesetzt wird. Zusammen mit dem Einrücken der Schlingfeder 24 und damit dem Festsetzen des Sonnenrades 8 kann gleichzeitig ein Schalter für die Energieversorgung des Elektromotors 5 betätigt werden, welcher das Anlaufen des Elektromotors 5 und damit den Antrieb des Planetenträgers 9 bewirkt. Der Schalter für die Energieversorgung des Elektromotors 5 und ein Betätigungsknopf bzw. Betätigungsgriff 25 für das Ein-bzw. Ausrücken der Schlingfeder 24 sind in der gezeigten Ausführungsform baueinheitlich gestaltet. Der Betätigungsknopf bzw. der Betätigungsgriff 25 sind vermittels eines Bowdenzuges 26 mit der Schlingfeder 24 verbunden.
Bei der in Fig. 3 dargestellten Ausführungsform besteht die Einrichtung zum Festsezten des Sonnenrades 8 aus einem Klinken-Zahnsegment, dessen Klinke 27 über einen Bowdenzug 28 mit dem Betätigungsknopf bzw. der Betätigungsgriff 25 verbunden ist und dessen Zahnsegment 29 vermittels eines weiteren Verbindungsmittels 30 mit dem Sonnenrad 8 verbunden ist.
In das Bremsseil 3 ist ein dessen Zugbelastung erfassender Sensor 31 eingeschaltet, welcher die jeweils herrschenden Zugspannungswerte ermittelt und einem nachgeschalteten Rechner 32 aufgibt, welcher seinerseits beherrschend in'die Energieversorgung 35 für den Elektromotor 5 eingeschaltet ist, derart, daß bei jedem elektrischen Lösen der Feststellbremse ein automatisches Nachstellen des Bremsseiles 3 zum Ausgleich eventuell auftretender Seillängungen oder Bremsbelagabnutzungen und dergl. erfolgt.
Da der Sensor 31 im Bremsseil 3 die herrschende Zugspannung dem Rechner 32 anzeigt und dieser in Abhängigkeit von den angezeigten Werten die Energieversorgung 35 für den Elektromotor 5 regelt,kann bei einer zusätzlichen Verbindung 33 des Betätigungsknopfes oder Betätigungsgriffes 25 mit dem Rechner 32 eine analoge stufenlose Regelung der Betätigung der Feststellbremse erreicht werden, dahingehend, daß eine Feststell-Lösefunktion zur Verfügung steht, welche auch bei elektromotorischem Betrieb ein müheloses Anfahren am Hang ermöglicht.

## Patentansprüche

1. Betätigungseinrichtung für eine Feststellbremse, insbesondere für eine Seilbremse in Kraftwagen, welche ein Betätigen der Feststellbremse wahlweise mittels Muskelkraft oder mittels einer motorischen Hilfskraft ermöglicht und einerseits eine auf wenigstens ein Bremsseil wirkende Zuspannvorrichtung (1), andererseits eine Antriebseinrichtung für die auf das wenigstens eine Bremsseil wirkende Zuspannvorrichtung (1) umfaßt, wobei die Antriebseinrichtung einen ersten mit einem Hilfsmotor (5) verbundenen und einen zweiten mit einem mittels Muskelkraft verstellbaren Organ (6; 7) verbundenen Antriebszug sowie ein Mittel zum wechselweisen Verbinden jeweils eines der beiden Antriebszüge der Antriebseinrichtung mit der das wenigstens eine Bremsseil wirkenden Zuspannvorrichtung (1) umfaßt,
**dadurch gekennzeichnet,**
**daß** die der auf das wenigstens eine Bremsseil (3) wirkenden Zuspannvorrichtung (1) zugeordnete Antriebseinrichtung ein Planetengetriebe (4) umfaßt, dessen erstes Getriebeglied (8) mit dem durch ein mittels Muskelkraft betätigbares Organ (6; 7) getriebenen Antriebszug verbunden ist, dessen zweites Getriebeglied (9) mit dem mittels eines Hilfsmotors (5) getriebenen Antriebszug verbunden ist und dessen drittes Getriebeglied (10) mit der Zuspannvorrichtung (1) verbunden ist.

2. Betätigungseinrichtung nach Anspruch 1, **dadurch gekennzeichnet, daß** das erste Getriebeglied das Sonnenrad (8) des Planetengetriebes (4) und das zweite Getriebeglied der Planetenträger (9) des Planetengetriebes (4) ist.

3. Betätigungseinrichtung nach Anspruch 2, **dadurch gekennzeichnet, daß** zum wahlweise Verbinden des von dem mittels Muskelkraft verstellbaren Organ (6; 7) getriebenen Antriebszuges mit dem Sonnenrad (8) und des von dem Hilfsmotor (5) getriebenen Antriebszuges mit dem Planetenträger (9) wechselweise das Sonnenrad (8) oder der Planetenträger (9) des Planetengetriebes (4) blockierbar bzw. antreibbar sind.

4. Betätigungseinrichtung nach Anspruch 2 oder 3, **dadurch gekennzeichnet, daß** das Sonnenrad (8) bzw. der Planetenträger (9) des Planetengetriebes (4) jeweils mittels einer in den zugeordneten Antriebszug eingeschalteten Blockiereinrichtung festsetzbar sind.

5. Betätigungseinrichtung nach einem der Ansprüche 1 bis 4, **dadurch gekennzeichnet, daß** die Zuspannvorrichtung (1) wenigstens teilweise als Seilscheibe ausgebildet und mit einem das dritte Getriebeglied bildenden Hohlrad (10) des Planetengetriebes (4) drehsicher verbunden ist.

6. Betätigungseinrichtung nach einem der Ansprüche 1 bis 5, **dadurch gekennzeichnet, daß** das dem Antrieb des dem ersten Getriebeglied (8) des Planetengetriebes (4) zugeordneten Antriebszugs zugeordnete Organ durch einen vermittels eines Trägers . schwenkbar an der Fahrzeugkarosserie abgestützten Handbremshebel (6) gebildet und vermittels eines Seilzuges (15) und einer Seilscheibe (16) mit dem ersten Getriebeglied (8) verbunden ist.

7. Betätigungseinrichtung nach einem der Ansprüche 1 bis 5, **dadurch gekennzeichnet, daß** das dem Antrieb des dem ersten Getriebeglied (8) des Planetengetriebes (4) zugeordneten Antriebszugs zugeordnete Organ durch ein vermittels eines Trägers schwenkbar an der Fahrzeugkarosserie abgestütztes Pedal (7) gebildet und vermittels eines Seilzuges (15) und einer Seilscheibe (16) mit dem ersten Getriebeglied (8) verbunden ist.

8. Betätigungseinrichtung nach Anspruch 6 oder 7, **dadurch gekennzeichnet, daß** die dem in den mit Muskelkraft antreibbaren Antriebszug eingeschalteten Seilzug zugeordnete Seilscheibe (16) vermittels eines Arretierungsscheiben (17, 18) umfassenden Rastmechanismusses mit einer das Sonnenrad (8) tragenden Welle (20) verbunden ist, wobei der Rastmechanismus derart ausgelegt ist, daß die Seilscheibe (16) nur bei Betätigung des zugehörigen Antriebszuges mit der das Sonnenrad (8) tragenden Welle (20) bzw. dem Sonnenrad (8) verbunden wird.

9. Betätigungseinrichtung nach einem der Ansprüche 1 bis 8, **dadurch gekennzeichnet, daß** dem das mit Muskelkraft betätigbare Organ (6; 7) mit dem Sonnenrad (8) des Planetengetriebes (4) verbindenden Seilzug (15) eine durch eine Schlingfeder (24) gebildete, auf eine das Sonnenrad (8) tragende Welle (20) wirkende Arretiereinrichtung (23) zugeordnet ist.

10. Betätigungseinrichtung nach einem der Ansprüche 1 bis 8, **dadurch gekennzeichnet, daß** dem das mit Muskelkraft betätigbare Organ (6; 7) mit dem Sonnenrad (8) des Planetengetriebes (4) verbindenden Seilzug (15) eine durch ein Klinken-Zahnsegment (27, 29) gebildete Arretiereinrichtung zugeordnet ist.

11. Betätigungseinrichtung nach einem der Ansprüche 1 bis 10, **dadurch gekennzeichnet, daß** der dem das zweite Getriebeglied bildenden Planetenträger (9) zugeordnete Antriebszug einen vermittels eines Schneckentriebes (22) mit dem Planetenträger (9) gekoppelten Elektromotor (5) umfaßt.

12. Betätigungseinrichtung nach Anspruch 11, **dadurch gekennzeichnet, daß** die Einrichtung zum Festsetzen des Planetenträgers (9) durch das dem Elektromotor (5) nachgeschaltete Schneckengetriebe (22) gebildet ist.

13. Betätigungseinrichtung nach Anspruch 11 oder 12, **dadurch gekennzeichnet, daß** dem Elektromotor (5) eine durch einen im Bereich des Fahrersitzes angeordneten Betätigungsknopf (25) oder dgl. gebildete Einschalteinrichtung zum aktivieren seiner Feststell- oder Lösefunktion zugeordnet ist.

14. Betätigungseinrichtung nach Anspruch 9, **dadurch gekennzeichnet, daß** der Freigabe der Schlingfeder (24) ein mittels eines Löseknopfes (25) betätigbarer Bowdenzug (28) zugeordnet ist.

15. Betätigungseinrichtung nach Anspruch 14, **dadurch gekennzeichnet, daß** der einem Klinkengesperre (27, 29) zugeordnete Löseknopf (25) am Handbremshebel angeordnet ist.

16. Betätigungseinrichtung nach einem der Ansprüche 1 bis 15, **dadurch gekennzeichnet, daß** in das wenigstens eine Bremsseil ein Kraftsensor (31) eingeschaltet ist, welcher die jeweils im Bremsseil (3) herrschende Zugkraft erfaßt und einer Steuereinrichtung (32) zuleitet, welche die Stromversorgung für einen Elektromotor (5) beherrscht.

## Claims

1. Actuation device for a parking brake, in particular for a cable brake in motor vehicles allowing actuation of the parking brake, optionally by means of muscular force or by means of an auxiliary motor force and on the one hand comprising a tightening mechanism (1) acting on at least one brake cable, and on the other hand, a drive device for the tightening mechanism acting on the at least one brake cable, wherein the drive device comprises a first drive pull connected to an auxiliary motor (5) and a second drive pull connected to a member (6; 7) which can be adjusted by means of muscular force, and a means for alternately connecting one of the two respective drive pulls of the drive device to the tightening mechanism (1) acting on the at least one brake cable, **characterised in that** the drive device associated with the tightening mechanism (1) acting on the at least one brake cable (3) comprises a planet gear (4), of which the first gear member (8) is connected to the drive pull driven by a member (6; 7) which can be actuated by means of muscular force, of which the second gear member (9) is connected to the drive pull driven by means of an auxiliary motor (5) and of which the third drive member (10) is connected to the tightening mechanism (1).

2. Actuation device according to claim 1, **characterised in that** the first gear member is the sun wheel (8) of the planet gear (4) and the second gear member is the planet carrier (9) of the planet gear (4).

3. Actuation device according to claim 2, **characterised in that** the sun wheel (8) or the planet carrier (9) of the planet gear (4) can be alternately blocked or driven for the optional connection of the drive pull driven by the member (6; 7) which can be adjusted by means of muscular force to the sun wheel (8), and of the drive pull driven by the auxiliary motor (5) to the planet carrier (9).

4. Actuation device according to claim 2 or 3, **characterised in that** the sun wheel (8) or the planet carrier (9) of the planet gear (4) can each be fixed by means of a blocking device connected into the associated drive pull.

5. Actuation device according to any one of claims 1 to 4, **characterised in that** the tightening mechanism (1) is formed at least partially as a pulley and is connected so as to be secured against rotation to a ring gear (10) of the planet gear (4) forming the third gear member.

6. Actuation device according to any one of claims 1 to 5, **characterised in that** the member associated with the drive of the drive pull associated with the first gear member (8) of the planet gear (4) is formed by a handbrake lever (6) pivotally supported on the vehicle body by means of a carrier and is connected to the first gear member (8) by means of a cable pull (15) and a pulley (16).

7. Actuation device according to any one of claims 1 to 5, **characterised in that** the member associated with the drive of the drive pull associated with the first drive member (8) of the planet gear (4) is formed by a pedal (7) pivotally supported on the vehicle body by means of a carrier and is connected to the first gear member by means of a cable pull (15) and a pulley (16).

8. Actuation device according to claim 6 or 7, **characterised in that** the pulley (16) associated with the cable pull connected into the drive pull, which can be driven by muscular force, is connected to a shaft (20) carrying the sun wheel (8) by means of a latching mechanism comprising locking discs (17, 18), wherein the latching mechanism is designed in such a way that the pulley (16) is only connected to the shaft (20) carrying the sun wheel (8) or the sun wheel (8) on actuation of the associated drive pull.

9. Actuation device according to any one of claims 1 to 8, **characterised in that** a locking device (23) formed by a wrap spring (24) and acting on a shaft (20) carrying the sun wheel (8) is associated with the cable pull connecting the member (6; 7) which can be actuated by muscular force to the sun wheel (8) of the planet gear (4).

10. Actuation device according to any one of claims 1 to 8, **characterised in that** a locking device formed by a pawl/toothed segment (27, 29) is associated with the cable pull (15) connecting the member (6; 7) which can be actuated by muscular force to the sun wheel (8) of the planet gear (4).

11. Actuation device according to any one of claims 1 to 10, **characterised in that** the drive pull associated with the planet carrier (9) forming the second gear member comprises an electric motor (5) coupled to the planet gear (9) by means of a worm gear drive (22).

12. Actuation device according to claim 11, **characterised in that** the device for fixing the planet carrier (9) is formed by the worm gear drive (22) connected downstream from the electric motor (5).

13. Actuation device according to claim 11 or 12, **characterised in that** a switching device formed by an actuation button (25) or the like arranged in the region of the driver's seat is associated with the electric motor (5) to activate its fixing or release function.

14. Actuation device according to claim 9, **characterised in that** a Bowden cable (28) which can be actuated by means of a release button (25) is associated with the release of the wrap spring (24).

15. Actuation device according to claim 14, **characterised in that** the release button (25) associated with the ratchet-and-pawl mechanism (27, 29) is arranged on the handbrake lever.

16. Actuation device according to any one of claims 1 to 15, **characterised in that** a force sensor (31) is connected in the at least one brake cable, the force sensor detecting the tensile force respectively prevailing in the brake cable (3) and feeding it to a control device (32) governing the power supply for an electric motor (5).

## Revendications

1. Dispositif d'actionnement d'un frein de stationnement, en particulier d'un frein à câble dans des véhicules automobiles, lequel dispositif permet d'actionner le frein de stationnement au choix par la force musculaire ou par une force auxiliaire générée par un moteur et comporte d'une part un dispositif tendeur (1) agissant sur au moins un câble de frein et d'autre part un dispositif d'entraînement destiné au dispositif tendeur (1) agissant sur l'au moins un câble de frein, le dispositif d'entraînement comportant un premier dispositif d'entraînement par traction relié à un moteur auxiliaire (5) et un deuxième dispositif d'entraînement par traction relié à un organe (6 ; 7) réglable par la force musculaire ainsi qu'un moyen pour relier alternativement l'un des deux dispositifs d'entraînement par traction du dispositif d'entraînement au dispositif tendeur (1) agissant sur l'au moins un câble de frein,
**caractérisé en ce que** le dispositif d'entraînement associé au dispositif tendeur (1) agissant sur l'au moins un câble de frein (3) comporte un engrenage planétaire dont le premier élément d'engrenage (8) est relié au dispositif d'entraînement par traction entraîné par un organe (6; 7) actionnable par la force musculaire, dont le deuxième élément d'engrenage (9) est relié au dispositif d'entraînement par traction entraîné par un moteur auxiliaire (5) et dont le troisième élément d'engrenage (10) est relié au dispositif tendeur (1).

2. Dispositif d'actionnement selon la revendication 1, **caractérisé en ce que** le premier élément d'engrenage est la roue solaire (8) de l'engrenage planétaire (4) et le deuxième élément d'engrenage est la cage de transmission planétaire (9) de l'entraînement planétaire (4).

3. Dispositif d'actionnement selon la revendications 2, **caractérisé en ce que** la roue solaire (8) ou la cage de transmission planétaire (9) de l'engrenage planétaire (4) peuvent être alternativement bloquées resp. entraînées en vue de relier au choix le dispositif d'entraînement par traction, entraîné par l'organe (6 ; 7) actionnable par la force musculaire, à la roue solaire (8) et le dispositif d'entraînement par traction, entraîné par le moteur auxiliaire (5), à la cage de transmission planétaire (9).

4. Dispositif d'actionnement selon la revendication 2 ou 3, **caractérisé en ce que** la roue solaire (8) resp. la cage de transmission planétaire (9) de l'engrenage planétaire (4) peuvent être bloquées au moyen d'un dispositif de blocage engagé dans le dispositif d'entraînement par traction associé.

5. Dispositif d'actionnement selon l'une des revendications 1 à 4, **caractérisé en ce que** le dispositif tendeur (1) est conformé au moins partiellement en poulie de renvoi et est relié fixe en rotation à une couronne de train planétaire (10) formant le troisième élément d'engrenage de l'engrenage planétaire (4).

6. Dispositif d'actionnement selon l'une des revendications 1 à 5, **caractérisé en ce que** l'organe, associé à l'entraînement du dispositif d'entraînement par traction associé au premier élément d'engrenage (8) de l'engrenage planétaire (4), est formé par un levier de frein à main (6) supporté par un support de façon à pouvoir pivoter au niveau de la carrosserie du véhicule et est relié au premier élément d'engrenage (8) au moyen d'un câble de traction (15) et d'une poulie de renvoi (16).

7. Dispositif d'actionnement selon l'une des revendications 1 à 5, **caractérisé en ce que** l'organe, associé à l'entraînement du dispositif d'entraînement par traction associé au premier élément d'engrenage (8) de l'engrenage planétaire (4), est formé par une pédale (7) supportée par un support de façon à pouvoir pivoter au niveau de la carrosserie du véhicule et est relié au premier élément d'engrenage (8) au moyen d'un câble de traction (15) et d'une poulie de renvoi (16).

8. Dispositif d'actionnement selon la revendication 6 ou 7, **caractérisé en ce que** la poulie de renvoi (16), associée au câble de traction engagé dans le dispositif d'entraînement par traction actionnable par la force musculaire, est reliée à un arbre (20), supportant la roue solaire (8), au moyen d'un mécanisme d'encliquetage comportant des disques de blocage (17, 18), le mécanisme d'encliquetage étant étudié de telle sorte que la poulie de renvoi (16) est reliée à l'arbre (20) supportant la roue solaire (8) resp. à la roue solaire (8) seulement lorsque le dispositif d'entraînement par traction associé est actionné.

9. Dispositif d'actionnement selon l'une des revendications 1 à 8, **caractérisé en ce qu'**un dispositif de blocage (23), formé par un ressort enroulé (24) et agissant sur un arbre (20) supportant la roue solaire (8), est associé au câble de traction (15) reliant l'organe (6; 7) actionnable par la force musculaire à la roue solaire (8) de l'engrenage planétaire (4).

10. Dispositif d'actionnement selon l'une des revendications 1 à 8, **caractérisé en ce qu'**un dispositif de blocage, formé par un segment denté à cliquet (27, 29), est associé au câble de traction (15) reliant l'organe (6; 7) actionnable par la force musculaire à la roue solaire (8) de l'engrenage planétaire (4).

11. Dispositif d'actionnement selon l'une des revendications 1 à 10, **caractérisé en ce que** le dispositif d'entraînement par traction, associé à la cage de transmission planétaire (9) formant le deuxième élément d'engrenage, comporte un moteur électrique (5) couplé à la cage de transmission planétaire (9) au moyen d'un engrenage à vis sans fin (22).

12. Dispositif d'actionnement selon la revendication 11, **caractérisé en ce que** le dispositif destiné à bloquer la cage de transmission planétaire (9) est formé par l'engrenage à vis sans fin (22) monté en aval du moteur électrique (5).

13. Dispositif d'actionnement selon la revendication 11 ou 12, **caractérisé en ce qu'**un dispositif de connexion, qui est formé par un bouton de commande (25) ou analogue agencé au niveau du siège du conducteur et qui est destiné à activer sa fonction de blocage ou de déblocage, est associé au moteur électrique (5).

14. Dispositif d'actionnement selon la revendication 9, **caractérisé en ce qu'**un câble Bowden (28) actionnable au moyen d'un bouton de déblocage (25) est associé à la libération du ressort enroulé (24).

15. Dispositif d'actionnement selon la revendication 14, **caractérisé en ce que** le bouton de déblocage (25) associé à un dispositif de verrouillage à cliquet (27, 29) est agencé au niveau du levier de frein à main.

16. Dispositif d'actionnement selon l'une des revendications 1 à 15, **caractérisé en ce qu'**un capteur dynamométrique (31) est intégré dans l'au moins un câble de frein et détecte la force de traction exercée à chaque fois sur le câble de frein (3) et envoie des signaux à un dispositif de commande (32) qui régule l'alimentation d'un moteur électrique (5).
